# EUROPÄISCHE PATENTSCHRIFT

(11) **EP 1 211 111 B1**
(45) Veröffentlichungstag und Bekanntmachung des Hinweises auf die Patenterteilung: **16.08.2006**
(21) Anmeldenummer: 01127192.1
(22) Anmeldetag: 16.11.2001
(51) Int. Cl.: B60J 1/20

(54) **Doppelrollo mit vereinfachtem Antrieb**
Double roller blind with simplified drive
Store en enrrouler double avec entraînement simplifié

(30) Priorität: 22.11.2000 DE 10057763
(43) Veröffentlichungstag der Anmeldung: 05.06.2002
(73) Patentinhaber: BOS GmbH & Co. KG, 73760 Ostfildern (DE)
(72) Erfinder: Schlecht, Werner P., 71665 Vaihingen/Enz (DE); Walter, Herbert, 73061 Ebersbach (DE)
(74) Vertreter: Rüger, Barthelt & Abel Patentanwälte

(56) Entgegenhaltungen:
- US-A- 3 183 083
- US-A- 4 758 041
- US-A- 5 201 810
- US-A- 6 086 133

## Beschreibung

Moderne Karosserieformen zeichnen sich durch verhältnismäßig große Fensterflächen aus. Die großen Fensterflächen führen wegen der starken Sonneneinstrahlung zu einer erheblichen Aufheizung des Fahrzeuginneren, und bei Fahrzeugen mit Klimaanlagen bedeutet die starke Aufheizung einen nicht unbeträchtlichen Energieverbrauch, um der Fahrzeugaufheizung entgegenzuwirken.

Die Kraftfahrzeuge werden deswegen in zunehmendem Maße mit Fensterrollos ausgerüstet.

Ein gattungsgemäßes Fensterrollo ist der US-A-3183033 bekannt.

Weiterhin ist es bekannt, seitlich neben dem Heckfenster zwei Führungsschienen anzubringen, in denen der Zugstab der Rollobahn endseitig geführt ist. Der Zugstab ist längenverstellbar, um der unterschiedlichen Fensterbreite folgen zu können. Die Betätigung geschieht durch die in den Führungsschienen laufende Schubglieder.

Auch hierbei sind nur zwei Zustände möglich, nämlich ungehinderter Lichtdurchtritt oder eine Abschwächung entsprechend der Abschwächungswirkung der Rollobahn.

Ausgehend hiervon ist es Aufgabe der Erfindung ein Fensterrollo für Kraftfahrzeuge zu schaffen, das insgesamt drei Betriebszustände ermöglicht und einen einfachen Antrieb aufweist.

Diese Aufgabe wird erfindungsgemäß mit dem Fensterrollo mit dem Merkmal des Anspruches 1 gelöst.

Das erfindungsgemäße Fensterrollo weist zwei Rollobahnen auf, die wahlweise jedoch zeitlich einander ausschließend aufgespannt werden können. Hierdurch sind insgesamt drei Zustände möglich, in denen der Lichtdurchtritt durch das betreffende Fenster unterschiedlich beeinflusst wird.

Obwohl zwei getrennte Rollobahnen vorhanden sind, wird hierfür letztlich nur ein einziger Antriebsmotor benötigt. Es wird von dem Umstand Gebrauch gemacht, dass die Schubglieder zum Betätigen der Zugstäbe sich in entgegengesetzte Richtungen bewegen. Durch entsprechende Kreuzkopplung kann mit Hilfe ein und desselben Paares von Schubgliedern wahlweise die eine oder die andere Rollobahn aufgespannt werden.

Dabei kommt der Verringerung der Anzahl der Antriebsmotoren eine wesentliche wirtschaftliche Bedeutung bei. Die Verminderung der Anzahl auf nur einen einzigen Motor führt zu erheblichen Kostenverminderungen, denn der Getriebemotor stellt einen wesentlichen Kostenfaktor bei einem derartigen Fensterrollo dar. Darüber hinaus vermindert sich der Platzbedarf ganz wesentlich. Die Anordnung kann in Zwischenräume eingebaut werden, die unter Umständen nicht ausreichend Platz für zwei Motoren bietet.

Wenn die Schubglieder in der Weise kreuzgekoppelt die Zugstäbe antreiben, dass die Enden ein und desselben Zuggliedes jeweils die weiter voneinander beabstandeten Enden der beiden Zugstäbe betätigen, werden enge Krümmungsradien und unnötige Längen vermieden.

Die Betätigung der Wickelwellen und die Synchronisation mit dem elektromotorischen Antrieb der Zugstäbe wird besonders einfach, wenn die Wickelwellen jeweils über einen eigenen Federmotor verfügen, durch den sie im Aufwickelsinne der betreffenden Rollobahn vorgespannt sind. Die unterschiedlichen Einstellungen für den Lichteintritt, lassen sich erreichen, wenn die eine Rollobahn nur verhältnismäßig wenig den Lichteintritt beeinträchtigt, so dass nach wie vor die Sicht durch die aufgespannte Rollobahn möglich ist. Eine solche Rollobahn besteht vorzugsweise aus einem weitmaschigen Gewirk oder einer gelochten und dunkel eingefärbten Folie.

Die andere Rollobahn kann dagegen sehr viel stärker den Lichtdurchtritt verhindern, wenn sei beispielsweise nur bei geparktem Fahrzeug Einsatz findet. Hierbei ist es günstig die Rollobahn so zu gestalten, dass sie die Aufheizung des Fahrzeuginneren so gut wie möglich unterbindet. Hierzu kommen insbesondere reflektierend beschichtete Rollobahnen in frage.

Die praktisch vollkommen lichtundurchlässige Rollobahn bietet obendrein einen Sichtschutz bei geparktem Fahrzeug.

Aufgrund der Karosserieformen und sonstigen gestalterischen Gründen, sind die Fenster häufig nicht rechteckig.

Sie haben in aller Regel eine mehr oder weniger starke trapezförmige Gestalt. Damit die Zugstäbe dieser Gestalt folgen können, sind sie vorzugsweise teleskopartig längenveränderlich.

Die Montage des erfindungsgemäßen Fensterrollos vereinfacht sich, wenn die einander näher benachbarten Führungsnuten in einer gemeinsamen Führungsschiene ausgebildet sind.

Damit auch ohne Zuhilfenahme von Federn die Längenverstellung der Zugstäbe bewerkstelligt werden kann, sind die Führungsnuten bevorzugt hinterschnittene Führungsnuten, um mit Hilfe der Führungsnuten eine Kraft erzeugen zu können, durch die der Zugstab in die Länge gezogen wird.

Die Schubglieder sind biegsame linienförmige Schubglieder, die vorzugsweise im wesentlichen rotationssymmetrisch sind. Hierdurch wird der Tendenz entgegengewirkt, sich in Bogenstücken, in denen die Schubglieder ausknicksicher geführt sind, zu drehen.

Die Schubglieder sind verhältnismäßig biegeweich und werden deswegen ausknicksicher zwischen der Führungsnut und dem Getriebemotor geführt.

Die Schubglieder bestehen vorzugsweise aus einer im wesentlichen zylindrischen Seele, die auf der Außenseite eine Verzahnung bildet. Diese Verzahnung kann von einer oder mehreren schraubenförmig verlaufenden Rippen gebildet sein. Auf diese Weise sind die Schubglieder in der Lage formschlüssig mit dem Getriebemotor zusammenzuwirken.

Da insbesondere bei dem erfindungsgemäßen Doppelantrieb eine gewissen Gefahr besteht, dass durch die Schubglieder der betreffende Zugstab nicht exakt parallel zu der jeweiligen Weckelwelle bewegt wird, ist es zweckmäßig die Wickelwellen pendelnd zu lagern. Auf diese Weise können sie sich unter der Wirkung der Vorspannung in der jeweiligen Rollobahn parallel zum Zugstab einstellen. Ein sonst auftretender Faltenwurf wird mit Sicherheit vermieden.

Im übrigen sind Weiterbildungen der Erfindung Gegenstand von Unteransprüchen. Dabei sollen auch solche Merkmale in Kombination als beansprucht angesehen werden, für die es kein spezielles Ausführungsbeispiel gibt.

In der Zeichnung sind Ausführungsbeispiele des Gegenstands der Erfindung dargestellt. Es zeigen:
- Fig. 1: einen Pkw in einer Rückansicht, unter Veranschaulichung eines erfindungsgemäßen ausgezogenen Heckscheibenrollos,
- Fig. 2: den prinzipiellen Aufbau des Heckscheibenrollos nach Fig. 1,
- Fig. 3: die Führungsschiene des Heckscheibenrollos nach Fig. 1, in einem Querschnitt,
- Fig. 4: die Lagerung der Wickelwellen des Heckscheibenrollos nach Fig. 1, in einer schematisierten vereinfachten Darstellung,
- Fig. 5: den Antrieb des Heckscheibenrollos nach Fig. 1, in einer einfachen schematisierten Darstellung, und
- Fig. 6: eine Weiche zum Zusammenführen der Führungsnuten, in einer stark schematisierten Darstellung.

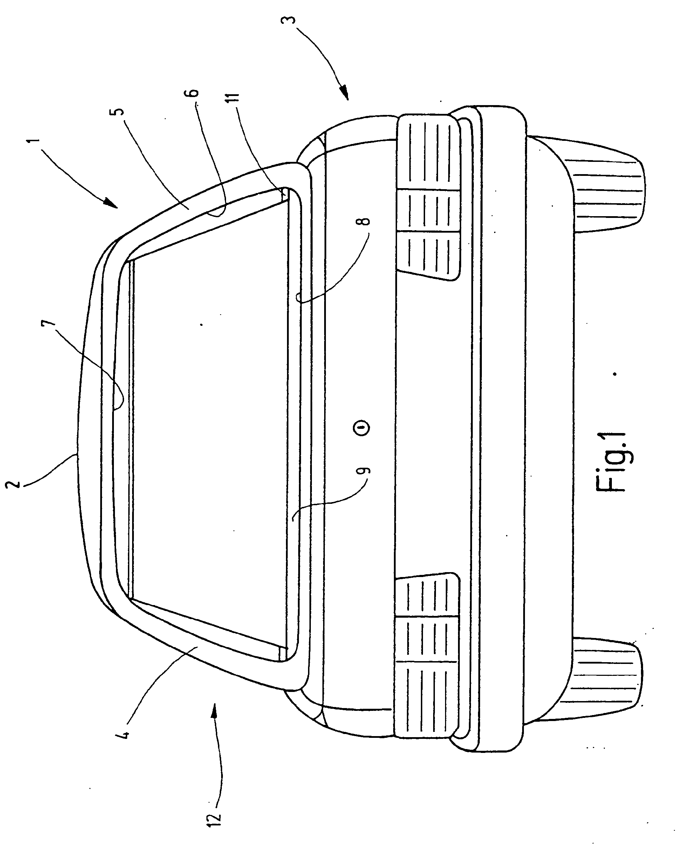

Fig. 1 zeigt in einer schematischen Darstellung die Rückansicht eins Pkw 1 mit einem Dach 2, einem Kofferraum 3 sowie zwei C-Säulen 4 und 5. Zwischen den beiden C-Säulen 4 und 5 befindet sich eine Heckfensteröffnung 6, die nach oben von einer Dachhinterkante 7 und nach unten von einer Fensterbrüstung 8 grenzen. In der Heckfensteröffnung 6 sitzt in bekannter Weise, beispielsweise mittels Fenstergummi eingeklebt, eine Heckscheibe.

Im Inneren des Pkw 1 befindet sich vor der Innenseite der Heckscheibe eine Hutablage 9, die sich zwischen der Fensterunterkante 8 und einer in der Figur nicht erkennbaren Rücksitzlehne horizontal erstreckt. In der Hutablage 9 verläuft ein gerader Auslaufschlitz 11.

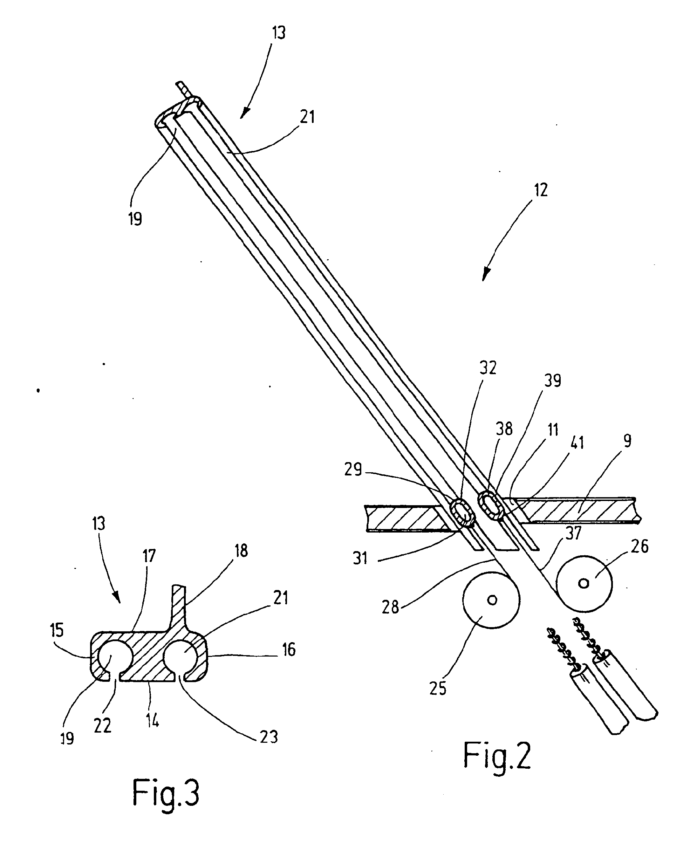

Der Auslaufschlitz 11 gehört zu einem Heckfensterrollo 12, dessen prinzipieller Aufbau in Fig. 2 stark schematisiert in einer Seitenansicht veranschaulicht ist.

Das Heckfensterrollo 12, weist zwei Führungsschienen auf, die neben den seitlichen Rändern der Heckfensteröffnung 7 an den beiden C-Säulen 4 und 5 befestigt ist. Wegen der aufgeschnittenen Prinzipdarstellung ist in Fig. 2 lediglich eine Führungsschiene 13 zu erkennen, die beispielsweise an der C-Säule 5 befestigt ist.

Die Führungsschiene 13 weist das in Figur 3 gezeigte Querschnittsprofil auf. Sie ist im Querschnitt im Wesentlichen rechteckig und wird von einer Vorderseite 14, zwei seitlichen Wänden 15 und 16 sowie einer Rückseite 17 begrenzt. Von der Rückseite 17 geht ein leistenartiger Befestigungsflansch 18 aus, mit dessen Hilfe die Führungsschiene 13 an entsprechenden Karosserieteilen zu befestigen ist.

In der Führungsschiene 13 sind parallel nebeneinander zwei im Querschnitt kreisförmige Führungsnuten 19 und 21 enthalten, die sich über Schlitze 22 und 23 zu der Vorderseite 14 hin öffnen. Die beiden Führungsnuten 19 und 21 sind im Querschnitt identisch und verlaufen längs der Führungsschiene 13 parallel mit gleichem Abstand.

Die Führungsschiene 13 besteht beispielsweise aus einem Aluminiumstrangpressprofil.

Da der Schlitz 22 bzw. 23 schmäler ist als der Durchmesser des kreisförmigen Abschnitts der Führungsnuten 19 bzw. 21, entstehen hinterschnittene Nuten, die geeignet sind ein linienförmiges Schubglied gegen Ausknicken zu schützen und das Schubglied bei entsprechendem Durchmesser daran zu hindern, durch den Schlitz 22 bzw. 23 nach außen auszutreten.

Die Führungsschienen 13 sind bzgl. mehrerer Achsen gebogen, damit sie der Kontur der Fensterkante folgen ohne in dem Fenster selbst sichtbar zu werden. Die Führungsschienen 13 sind so angeordnet, dass die Nuten 19 und 21 bezogen auf die Längserstreckung des Fahrzeugs hintereinander liegen, d.h. sie liegen bezogen auf einen Vertikalschnitt durch das Fahrzeug, der der Fahrzeuglängsachse folgt, nebeneinander, womit die eine Führungsnut zu dem Kofferraum 3 und die andere Führungsnut mehr zum Fahrzeuginneren hin gelegen ist.

Die Führungsschienen 13 reichen nach unten, wie Figur 2 erkennen läßt, durch den Schlitz 11 bis unterhalb der Hutablage 9.

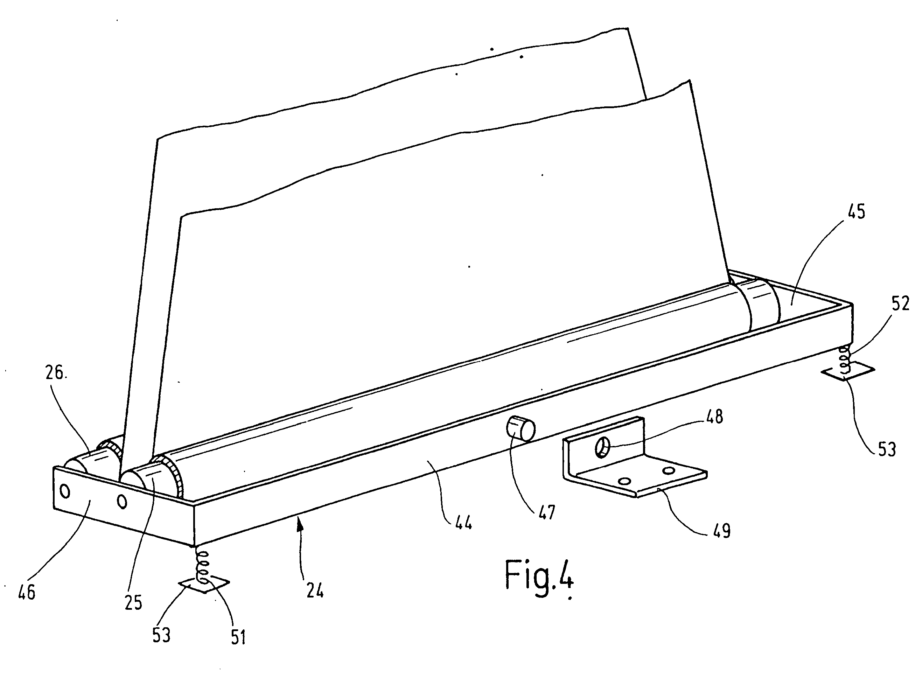

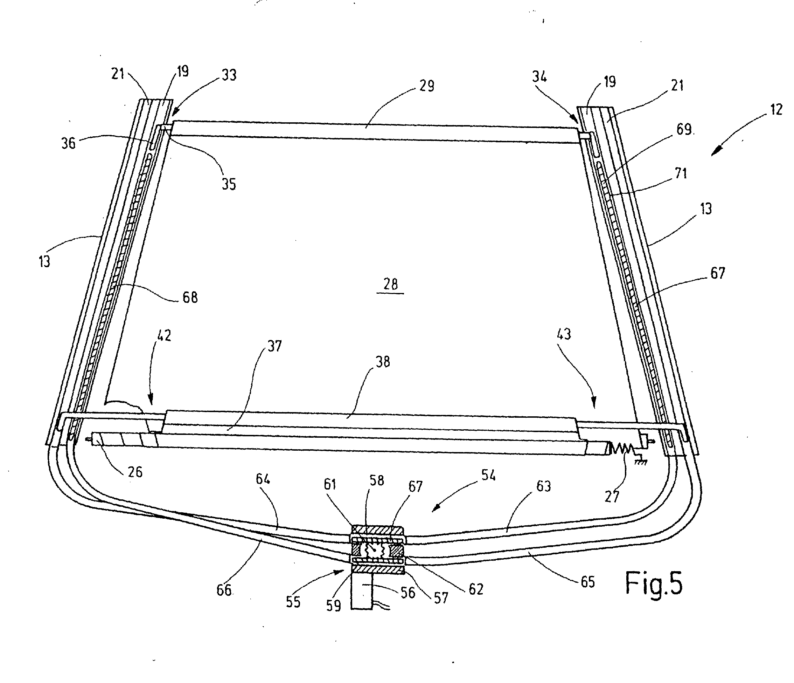

Unterhalb der Hutablage 9 sind, wie Figur 4 zeigt, in einem Lagerbügel 24 zwei gegensinnig wickelnde Wickelwellen 25 und 26 drehbar gelagert. Jede der Wickelwellen 25 und 26 ist rohrförmig und beherbergt einen Federmotor. Für die Wickelwelle 26 ist dieser Federmotor bei 27 in Figur 5 schematisch dargestellt. Der Federmotor 27 besteht aus einer Schraubenfeder, die mit einem Ende im Inneren der betreffenden Wickelwelle festgelegt ist und anderenends an dem Lagerbügel 24 verankert ist.

An der Wickelwelle 25, die dem Wageninneren zu gelegen ist, ist mit einer Kante eine Rollobahn 28 befestigt, deren Zuschnitt eine trapezförmige Annäherung der Kontur des Heckfensters 6 ist. Die von der Wickelwelle 25 abliegende Kante ist zu einer schlauchförmigen Schlaufe 29 geformt, in der ein Zugstab 31 sitzt. Der Zugstab 31 besteht aus einem formsteifen Rohr 32, in das zwei L-förmige Führungsglieder 33 und 34 von beiden Enden her eingesteckt sind, wie dies Figur 5 veranschaulicht.

Das Führungsglied 33 besteht aus einem langen, in dem formsteifen Rohr 32 verschieblichen Schenkel 35 und einem 1-förmig abgewinkelten Schenkel 36. Der Schenkel 35 ist an den Querschnitt des formsteifen Rohres 32 angepasst und so bemessen, dass er durch den Schlitz 22 bzw. 23 in das Innere der betreffenden Führungsnut 19 oder 21 reichen kann. Der Schenkel 36 dagegen ist an den Querschnitt des kreisförmigen Teils der Führungsnut 19 oder 21 angepasst. Auf diese Weise ist der Schenkel 35 in dem formsteifen Rohr 32 längsverschieblich und der Schenkel 36 kann entlang der betreffenden Führungsnut 19, 21 laufen. Er ist seitlich nicht aus dem Schlitz 22, 23 herausziehbar.

Das Führungsglied 34 hat den gleichen Aufbau wie das Führungsglied 33, so dass sich eine neue Erläuterung insoweit erübrigt.

An der Wickelwelle 26 ist eine weitere Rollobahn 37 einends angebracht, die ebenfalls an ihrer von der Wickelwelle 26 abliegenden Kante eine Schlaufe 38 bildet. In der Schlaufe 38 sitzt ein längenverstellbarer Zugstab 39, bestehend aus einem formsteifen Rohr 41, dessen Länge der Kante entspricht und in der zwei Führungsglieder 42 und 43 geführt sind, die denselben Aufbau aufweisen, wie dies im Zusammenhang mit dem Führungsglied 33 ausführlich erläutert ist.

Die Rollobahnen 28 und 37 laufen zwischen den Wickelwellen 25, 26 ab.

Der Lagerbügel 24 zur Lagerung der beiden Wickelwellen 25 und 26 ist ein U-förmiges Gebilde mit einem Rückenteil 44 und zwei rechtwinklig davon ausgehenden Schenkeln 45 und 46, in denen die Wickelwellen 25 und 26 mit entsprechenden Lagerzapfen drehbar gelagert sind.

In der Mitte des Rückenabschnittes 44, befindet ein Lagerzapfen 47, dessen Achse rechtwinklig zu der Achse der beiden zueinander achsparallelen Wickelwellen 25 und 26 verläuft. Der Lagerzapfen 25 sitzt in einer Lagerbohrung 48 eines Halters 49, der unterhalb der Hutablage 9 in dem Fahrzeug fest verankert ist. Auf diese Weise können sich die beiden Wickelwellen 25 und 26 begrenzt bzgl. der Achse, definiert durch den Lagerzapfen 47, drehen.

Die mittlere Stellung, d.h. die zentrierte Stellung wird durch zwei Druckfedern 51 und 52 vorgegeben, die sich einends an dem Lagerbügel 24 und anderenends an einer karosseriefesten Auflage 53 abstützen die schematisch angegeben ist. Die beiden Federn 51 und 52 sitzen an der Übergangsstelle des Rückenteils 44 in den jeweiligen Schenkel 45 oder 46, so dass gleiche Drehmomente entstehen.

Um die Rollobahnen 28 und 37 auszufahren ist eine Antriebseinrichtung 54 vorgesehen, die in Figur 5 stark schematisiert gezeigt ist. Zur Vereinfachung der Darstellung und zur Erläuterung des Verständnisses der Erfindung sind die beiden seitlichen Führungsschienen 13 in Figur 5 gedreht veranschaulicht, in der Weise, dass die beiden Führungsnuten 19 und 21 nebeneinander in der Zeichenebene liegen. Diese Darstellung ist wie gesagt nur zur Erleichterung des Verständnisses vorgenommen worden. In Wahrheit liegen die beiden Führungsnuten 19 und 21 hintereinander und sie öffnen sich auch in Richtung aufeinander zu und nicht in Richtung auf den Betrachter.

Zu der Antriebseinrichtung 54 gehört ein Getriebemotor 55, der sich aus einem permanent erregten Gleichstrommotor 56 und einem Getriebegehäuse zusammensetzt. In dem Getriebegehäuse sind parallel zueinander zwei Führungskanäle 58 und 59 enthalten, zwischen denen auf einer Ausgangswelle 61 ein Ausgangszahnrad 62 vorgesehen ist. Das Ausgangszahnrad 62 kann über die damit drehfest verbundene Ausgangswelle 61 wahlweise in beiden Drehrichtungen in Gang gesetzt werden.

Von dem Führungskanal 58 geht ein Führungsrohr 63 zu dem unteren Ende der Führungsnut 19 in der rechten Führungsschiene 13. Ein weiteres Führungsrohr 64 verbindet das andere Ende des Führungskanals 58 mit dem unteren Ende der Führungsnut 21 in der linken Führungsschiene 13. Der Führungskanal 59 ist am rechten Ende über ein Führungsrohr 65 mit dem unteren Ende der Führungsnut 21 in der rechten Führungsschiene 13 und am linken Ende über ein Führungsrohr 66 mit dem unteren Ende der Führungsnut 19 in der Führungsschiene 13 verbunden. Sowohl durch den Führungskanal 58 als auch durch den Führungskanal 59 verläuft jeweils ein biegeelastisches Schubglied 67 bzw. 68. Die Länge der beiden Schubglieder 67 und 68 ist so bemessen, dass sie in der Neutralstellung gerade eben nicht in die zugehörige Führungsnuten 19 bzw. 21 hineinragen.

Die beiden Schubglieder 67 und 68 haben denselben Aufbau. Sie bestehen jeweils aus einer elastisch biegsamen Seele 69, der auf seiner Außenseite eine oder mehrere Rippen 71 trägt, die dort ein ein- oder mehrgängiges Gewinde bilden. Die Rippen 71 stehen radial vor und laufen schraubenförmig über die zylindrische Seele 69 von einem Ende des Schubglieds bis zum anderen Ende. Das Ausgangszahnrad 62 trägt eine Verzahnung, die zwischen die von den Rippen 71 gebildeten Nuten eingreifen kann. Auf diese Weise ist das Ausgangszahnrad 72 formschlüssig mit den Schubgliedern 67 und 68 gekuppelt.

Die Funktionsweise des beschriebenen Heckfensterrollos ist wie folgt:

In der Ruhestellung sind unter der Wirkung der entsprechenden Federmotoren 27 die Wickelwellen 25, 26 in eine Stellung gedreht, in der die Rollobahnen 28 und 37 aufgewickelt sind. In dieser Stellung befinden sich die schlauchartigen Schlaufen 29 und 38 in dem Auslaufschlitz 11, wie dies Figur 2 erkennen läßt. Die Führungsglieder 33, 34 und 42, 43 liegen in der Nähe der unteren Enden der beiden Führungsschienen 13, ohne dass jedoch die Schenkel 36 aus den zugehörigen Führungsnuten 19 und 21 freigekommen sind. Diese Stellung ist für die Führungsglieder 42 und 43 in Figur 5 gezeigt. Die Führungsglieder 33 und 34 nehmen eine ähnliche Stellung ein und würden, wenn sie in Figur 5 eingezeichnet wären, von den Führungsgliedern 42 und 43 verdeckt sein.

Gleichzeitig sind die beiden Schubglieder 68 und 69 mit ihren beiden Enden von den betreffenden Schenkeln 36 beabstandet.

Wenn der Benutzer ausgehend von dieser Stellung des Heckfensterrollos 12, in der der Lichteintritt in das Fahrzeuginnere überhaupt nicht beeinflusst wird, eine erste Abschattungswirkung erzeugen möchte, fährt er beispielsweise die Rollobahn 28 aus. Die Rollobahn 28 vermindert den Lichtdurchtritt ohne ihn vollständig zu unterbinden. Hierzu besteht die Rollobahn 28 beispielsweise aus einem offnen Kettengewirke, oder einer gelochten und schwarz eingefärbten Kunststofffolie.

Um die Rollobahn 28 auszufahren, wird der Getriebemotor 55 mit einer solchen Drehrichtung in Gang gesetzt, dass er das Schubglied 69 nach rechts durch die Führungsnut 19 bewegt. Da die beiden Schubglieder 68 und 69 an diametral gegenüberliegenden Seiten mit dem Ausgangszahnrad 62 kämmen, wird gleichzeitig das Schubglied 68 nach links durch die Führungsnut 19 und die linke Führungsschiene 13 vorgeschoben. Nach einem kurzen Stück des Vorschubwegs kommen die freien Enden der beiden Schubglieder 68 und 69 mit den unteren Enden der Schenkel 36 der beiden Führungsglieder 33 und 34 in Eingriff und schieben im weiteren Verlauf die Führungsglieder 33 und 34 in Richtung auf das obere Ende der beiden Führungsschienen 13.

Da sich der Abstand zwischen den Führungsschienen verändert, tauchen gleichzeitig teleskopartig die Schenkel 35 der Führungsglieder 33 und 34 in das in der betreffenden Schlaufe 29 enthaltene formsteife Rohr 33 des Zugstabs 31 ein.

Sobald die Endlage erreicht ist, wird der Getriebemotor 55 stillgesetzt. Der Getriebemotor 55 ist selbsthaltend und arretiert die Schubglieder 68 und 69 in der jeweils erreichten Stellung.

Das Abschalten des Getriebemotors 55 erfolgt mit Hilfe von Endschaltern oder indem die Führungsglieder 33 und 34 an Anschläge anlaufen, so dass ein in einer Elektronik auszuwertender Blockierstrom auftritt, der zum Abschalten führt.

Die Rollobahn 28 wird nunmehr zwischen dem Zugstab 31 und der betreffenden Wickelwelle 25 aufgespannt gehalten.

Zum Einfahren wird der Getriebemotor 55 mit der entgegengesetzten Drehrichtung in Gang gesetzt, so dass die beiden Führungsglieder 68 und 69 nach unten aus den zugehörigen Führungsschienen 13 heraus bewegt werden. Gleichzeitig läuft der Zugstab 31 mit nach unten, weil durch die Wirkung des Federmotors 27 der Wickelwelle 25 die Rollobahn 28 ständig unter Spannung gehalten wird.

Sobald die Rollobahn 28 vollständig aufgewickelt ist, sind die Zugglieder 68 und 69 endseitig von den Führungsgliedern 33 und 34 freigekommen. Diese zentrierte Mittelstellung kann ebenfalls durch Endschalter erfasst werden und führt zum Stillsetzen des Getriebemotors 55.

Wenn der Getriebemotor 55 nach dem vollständigen Einfahren der Rollbahn 28 mit derselben Drehrichtung eingeschaltet bleibt, wird das Schubglied 69 in die Führungsnut 21 der linken Führungsschiene 13 und das Schubglied 68 in die Führungsnut 21 der rechten Führungsschiene 13 vorgeschoben. Da in den Führungsnuten 21 der Zugstab 39 der anderen Rollobahn 37 geführt ist, wird nunmehr dieser Zugstab 39 von den beiden Schubgliedern 68 und 69 mitgenommen. Die Folge hiervon ist, dass jetzt die Rollobahn 37 vor dem Heckfenster 6 aufgespannt wird.

Die Rollobahn 37 zeigt eine andere Lichtdurchlässigkeit 28. Beispielsweise kann die Rollobahn 37 vollständig lichtundurchlässig sein, womit jeglicher Lichteintritt in das Fahrzeuginnere unterbunden ist. Eine solche Betriebsstellung ist insbesondere bei geparktem Auto von Vorteil, weil sich hierdurch das Aufheizen des Innenraums durch Lichteinstrahlung durch die Heckscheibe vollständig ausschließen läßt.

Die Wärmeeinstrahlung kann weiter vermindert werden, wenn die nach außen zeigende Seite der Rollobahn 37 zusätzlich metallisiert ist, um die Infrarotstrahlen zu reflektieren.

Das Einfahren der Rollobahn 37 geschieht in der sinngemäß umgekehrten Weise.

Da aufgrund von Montagetoleranzen nicht immer gewährleistet sein kann, dass die Schubglieder 68 und 69 die betreffenden Zugstäbe 31 oder 39 exakt parallel zu der betreffenden Wickelwelle 25 oder 26 anheben, kann eine Verkantung des betreffenden Zugstabs 32, 38 gegenüber der zugehörigen Wickelwelle 25, 26 auftreten. Ohne Gegenmaßnahmen würde die Verkantung zu schrägverlaufen Wellen oder Falten in der betreffenden Rollobahn führen. Weil jedoch die beiden Wickelwellen 25 und 26 schwenkbar in dem Lagerbügel 24 aufgenommen sind, kann sich die Wickelwelle begrenzt schräg und dann damit exakt parallel zu dem betreffenden Zugstab 32, 39 ausrichten. Schräg verlaufende Spannungen in der Rollobahn sind ausgeschlossen.

Mit Hilfe der beiden Federn 51 und 52 wird der Bügel in die zentrierte Lage vorgespannt. Ein Taumeln um die Querachse und somit ein Klappern während der Fahrt wird ausgeschlossen.

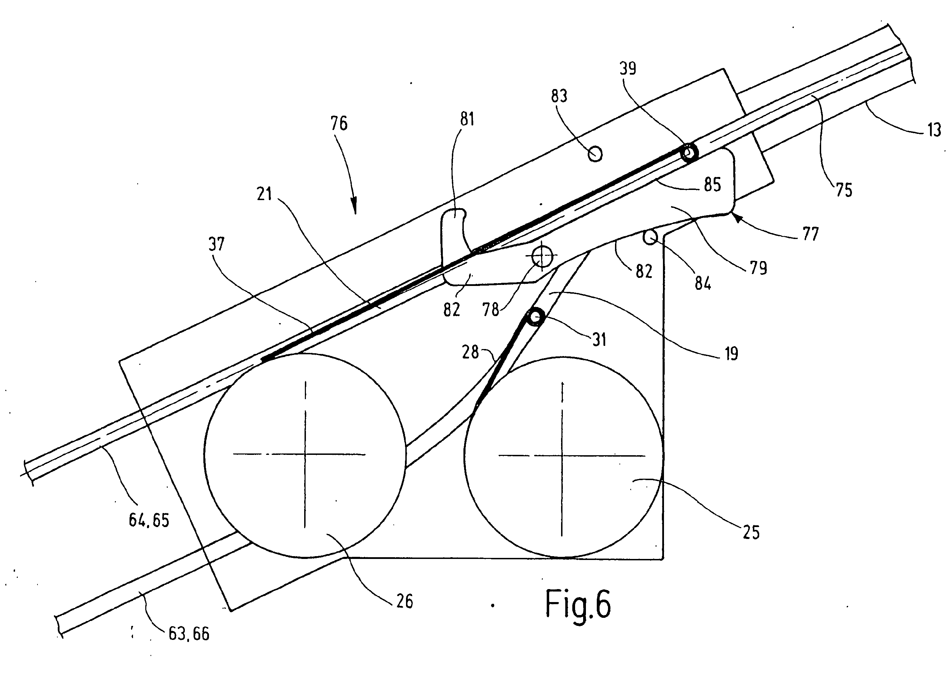

Fig. 6 zeigt vereinfacht eine alternative Ausführungsform für die Führungsmittel zum Führen der Zugstäbe 31 und 38.

Während bei dem Ausführungsbeispiel, gemäß den Figuren 2 und 5, in jeder Führungsschiene zwei Führungsnuten enthalten sind, weist das Ausführungsbeispiel nach Figur 6 je Seite des Fensterrollos 12 nur noch eine Führungsnut 75 auf. An dem wickelwellenseitigem Ende geht die Führungsschiene 13 in eine Weiche 76 über, in der sich die Führungsnut 75 in die beiden Führungsnuten 19 und 21 aufteilt. In Verlängerung der beiden Führungsnuten 19 und 21 münden wie bei dem Ausführungsbeispiel nach Fig. 5 die Führungsrohre 63...66 in der sinngemäß entsprechenden Weise.

Bei dem gezeigten Ausführungsbeispiel läuft die Führungsnut 21 im wesentlichen gerade durch und mündet ohne Bogen in die Führungsnut 75, während die Führungsnut 19 den Abzweig aus der Führungsnut 75 darstellt und von der Seite her einmündet.

Um die Zugstäbe 31 und 38 jeweils in die richtige Führungsnut 19 bzw. 21 einlaufen zu lassen, ist eine schwenkbar gelagert Weichenzunge 77 vorhanden. Die Weichenzunge 77 ist bei 78 schwenkbar um eine Achse gelagert, die parallel zu den Achsen der beiden Wickelwellen 25 und 26 liegt. Die Achse 78 befindet sich auf dem Herzstück der Weiche 76 unmittelbar bevor sich die beiden Nuten 19 und 21 vereinigen.

Die Weichenzunge 77 stellt einen zweiarmigen Hebel mit einem ersten Abschnitt 79 und einem zweiten einen Haken 81 tragenden Abschnitt 82 dar.

Die Funktion der Weiche ist wie folgt:

In der Ruhestellung, wenn beide Rollobahnen 28 und 37 eingefahren sind, liegt die Zugstange 38 in dem Haken 81 und verschwenkt die Weichenzunge 77 bezogen auf Fig. 6 in Gegenuhrzeigersinne. Die Verschwenkung reicht aus, damit der Abschnitt 79 mit seiner Führungsfläche 82 den bogenförmigen Verlauf am Übergang von der Nut 19 zu der Nut 75 ergänzt. In dieser Stellung liegt der Abschnitt 79 an einem Anschlag 83 an.

Der Zugstab 31 kann nun über das betreffenden Schubglied 68 oder 69, das über das Führungsrohr 63 bzw. 66 zugeführt wird, von der Wickelwelle 25 weggeschoben werden. Dabei kommt der Zugstab 31 nach einem Stück des Wegs aus der Führungsnut 19 in die gemeinsame Führungsnut 75.

Beim Einfahren läuft der Zugstab 31 an der Führungsfläche 82 entlang und wird hierdurch im weiteren Verlauf in die Nut 19 zurückgebracht.

Beim Ausfahren der Rollobahn 37 bewegt sich der Zugstab 38 aus dem Haken 81 weg, so dass unter der Wirkung einer nicht weiter gezeigten Feder die Weichenzunge 77 mit ihrer Führungsfläche 82 an einen Anschlag 84 anliegt. In dieser Stellung verschließt eine Führungsfläche 85, die der Führungsfläche 82 im wesentlichen gegenüber liegt, den Einlauf in die Führungsnut 19.

Figur 6 veranschaulicht den Zustand unmittelbar nachdem die Zugstange 38 in die Führungsnut 75 eingelaufen ist, bzw den Zustand unmittelbar bevor die Zugstange 38 beim Einfahren die Einmündung der Führungsnut 19 passiert.

Die Rollobahn 37 kann jetzt wie zuvor beschrieben aus- und auch wieder eingefahren werden. Die Weichenzunge 77 sorgt dafür, dass nach dem Passieren der Verzweigungsstelle der Zugstab 38 in der richtigen Führungsnut 21 zu liegen kommt.

Ein Fensterrollo ist mit Rollobahnmitteln versehen, die im ausgefahrenen Zustand jeweils unterschiedliche Grade der Lichtdurchlässigkeit an dem Fenster ermöglichen. Hierzu werden zwei Rollobahnen auf getrennten Wickelwellen aufgewickelt. Zum wahlweisen Ausfahren entweder der einen oder der anderen Rollobahn wird nur ein Antriebsmotor verwendet.

## Patentansprüche

1. Fensterrollo (12) zum Regulieren des Lichteintritts durch ein Fenster in einen Innenraum des Kraftfahrzeugs, insbesondere Heckfensterrollo,
mit einer ersten Wickelwelle (25), die drehbar belagert ist,
mit einer zweiten Wickelwelle (26), die achsparallel zu der ersten Wickelwelle (25) und dieser benachbart gelagert ist,
mit einer ersten Rollobahn (28), die mit einer Kante an der ersten Wickelwelle (25) befestigt ist und deren dazu parallele Kante (29) mit einem ersten Zugstab (31) verbunden ist,
mit einer zweiten Rollobahn (37), die mit einer Kante an der zweiten Wickelwelle (26) befestigt ist und deren dazu parallele Kante (38) mit einem zweiten Zugstab (39) verbunden ist, und folgenden kennzeichnenden Merkmalen:
mit einem Paar von Führungsmittel (13,76), von denen sich jedes seitlich neben den aufgespannten Rollobahnen (28,37) erstreckt,
mit einer Antriebseinrichtung (54), die lediglich ein erstes und ein zweites Schubglied (68,69) aufweist, das derart angeordnet ist, dass ein Ende des ersten Schubglieds (68) mit dem einen Ende des ersten Zugstabs (31) und das andere Ende des ersten Schubglieds (68) mit dem einen Ende des zweiten Zugstabs (39) zusammenwirkt, und dass ein Ende des zweiten Schubglieds (69) mit dem anderen Ende des ersten Zugstabs (32) und das andere Ende des zweiten Schubglieds (69) mit dem anderen Ende des zweiten Zugstabs (39) zusammenwirkt, wobei in einer Stellung der beiden Schubglieder (68,69) keine der beiden Rollobahnen (28,37) aufgespannt ist.

2. Fensterrollo nach Anspruch 1, **dadurch gekennzeichnet, dass** das eine Ende des ersten Zugstabs (31) und das eine Ende des zweiten Zugstabs (39) in Führungsnuten (19,21,75) laufen, die um im Wesentlichen die Länge der ersten oder der zweiten Wickelwelle (25,26) von einander beabstandet sind.

3. Fensterrollo nach Anspruch 1, **dadurch gekennzeichnet, dass** die Führungsmittel (13,76) ein Paar erster Führungsnuten (19), die seitlich der aufgespannten ersten Rollobahn (28) verlaufen und der Führung des ersten Zugstabs (31) dienen, und ein Paar zweiter Führungsnuten (21) bilden, die seitlich der aufgespannten zweiten Rollobahn (37) verlaufen und der Führung des zweiten Zugstabs (39) dienen.

4. Fensterrollo nach Anspruch 1, **dadurch gekennzeichnet, dass** die Führungsmittel (13,76) ein Paar erster Führungsnuten (19), die ein Stück weit seitlich der aufgespannten ersten Rollobahn (28) verlaufen und der Führung des ersten Zugstabs (31) dienen, und ein Paar zweiter Führungsnuten (21) bilden, die ein Stück weit seitlich der aufgespannten zweiten Rollobahn (37) verlaufen und der Führung des zweiten Zugstabs (39) dienen, und dass die ersten Führungsnuten (19) und die zweiten Führungsnuten (21) in eine Weiche (76) einmünden, von der aus jeweils nur eine Führungsnut (75) weiterführt, die sich längs der betreffenden Fensterkante erstreckt.

5. Fensterrollo nach Anspruch 1, **dadurch gekennzeichnet, dass** der ersten und/oder der zweiten Wickelwelle (25,26) jeweils ein eigener Federmotor (27) zugeordnet ist, der die jeweilige Wickelwelle (25,26) im Aufwickelsinn vorspannt.

6. Fensterrollo nach Anspruch 1, **dadurch gekennzeichnet, dass** die eine Rollobahn (28,37) aus einem Gewirk oder einer gelochten Folie besteht.

7. Fensterrollo nach Anspruch 1, **dadurch gekennzeichnet, dass** eine der Rollbahnen (28,37) im wesentlichen vollständig lichtundurchlässig ist.

8. Fensterrollo nach Anspruch 1, **dadurch gekennzeichnet, dass** eine der Rollobahnen (28,37) auf der von dem Innenraum des Fahrzeugs wegweisenden Seite metallisiert ist.

9. Fensterrollo nach Anspruch. 1, **dadurch gekennzeichnet, dass** der erste und/oder der zweite Zugstab (31,39) längenverstellbar sind, derart, dass sie in der Lage sind dem sich ändernden Abstand der Führungsnuten (19,21,75) zu folgen.

10. Fensterrollo nach Anspruch 3, **dadurch gekennzeichnet, dass** die einander benachbarten Führungsnuten (19,21) der beiden Paare von Führungsnuten (19,21) in einer gemeinsamen Führungsschiene (13) angeordnet sind.

11. Fensterrollo nach Anspruch 1, **dadurch gekennzeichnet, dass** die Führungsnuten (19,21,75) hinterschnittene Führungsnuten sind.

12. Fensterrollo nach Anspruch 1, **dadurch gekennzeichnet, dass** die Antriebseinrichtung (54) zum Bewegen der beiden Schubglieder (68,69) lediglich einen Getriebemotor (54) umfasst.

13. Fensterrollo nach Anspruch 1, **dadurch gekennzeichnet, dass** die Schubglieder (68,69) biegsame linienförmige Schubglieder sind, die knicksicher zwischen dem Getriebemotor (55) und der betreffenden Führungsnut (19,21) geführt sind.

14. Fensterrollo nach Anspruch 1, **dadurch gekennzeichnet, dass** die Schubglieder (68,69) angenähert zylindrische Gebilde sind, die mit einer Verzahnung (71) auf der Außenseite versehen sind, die über die Länge mit konstanter Teilung durchläuft.

15. Fensterrollo nach Anspruch 1, **dadurch gekennzeichnet, dass** die Verzahnung (71) von einer auf der Außenseite schraubenförmig verlaufenden Rippe gebildet ist.

16. Fensterrollo nach Anspruch 1, **dadurch gekennzeichnet, dass** die Schubglieder (68,69) mit dem Getriebemotor (55) formschlüssig zusammenwirken.

17. Fensterrollo nach Anspruch 1, **dadurch gekennzeichnet, dass** zumindest eine der Wickelwellen (25,26) endseitig in einem Lagerbügel (24) gelagert ist, der bezüglich einer Achse in dem Fahrzeug an einem fahrzeugfesten Sockel (49) schwenkbar gelagert ist, wobei die Achse rechwinklig zur Drehachse der betreffenden Wickelwelle (25,26) liegt.

18. Fensterrollo nach Anspruch 1, **dadurch gekennzeichnet, dass** der Lagerbügel (24) durch Federmittel (51,52) in eine zentrierte Stellung elastisch vorgespannt ist.

## Claims

1. Window roller blind (12) for regulating the entry of light through a window into an interior of the motor vehicle, in particular a rear window roller blind, with a first winding shaft (25), which is rotatably disposed,
with a second winding shaft (26), which is disposed axis-parallel to the first winding shaft (25) and adjacent to this,
with a first blind sheet (28), which is fastened to the first winding shaft (25) at one edge and its edge (29) parallel thereto is connected to a first pull rod (31), with a second blind sheet (37), which is fastened to the second winding shaft (26) at one edge and its edge (38) parallel thereto is connected to a second pull rod (39),
and with the following characterising features:
with a pair of guide elements (13, 76), each of which extends laterally next to the opened out blind sheets (28, 37),
with a drive means (54), which only has a first and a second pushing member (68, 69), which is arranged in such a manner that an end of the first pushing member (68) cooperates with one end of the first pull rod (31) and the other end of the first pushing member (68) cooperates with one end of the second pull rod (39), and that an end of the second pushing member (69) cooperates with the other end of the first pull rod (31) and the other end of the second pushing member (69) cooperates with the other end of the second pull rod (39), wherein in a position of the two pushing members (68, 69) neither of the two blind sheets (28, 37) is opened out.

2. Window roller blind according to Claim 1, **characterised in that** one end of the first pull rod (31) and one end of the second pull rod (39) run in guide grooves (19, 21, 75), which are spaced from one another substantially by the length of the first and the second winding shaft (25, 26).

3. Window roller blind according to Claim 1, **characterised in that** the guide elements (13, 76) form a pair of first guide grooves (19), which run laterally of the opened out first blind sheet (28) and serve to guide the first pull rod (31), and a pair of second guide grooves (21), which run laterally of the opened out second blind sheet (37) and serve to guide the second pull rod (39).

4. Window roller blind according to Claim 1, **characterised in that** the guide elements (13, 76) form a pair of first guide grooves (19), which for a short distance run laterally of the opened out first blind sheet (28) and serve to guide the first pull rod (31), and a pair of second guide grooves (21), which for a short distance run laterally of the opened out second blind sheet (37) and serve to guide the second pull rod (39), and that the first guide grooves (19) and the second guide grooves (21) open into a switch point (76), from which only one respective guide groove (75) continues, which extends along the length of the respective window edge.

5. Window roller blind according to Claim 1, **characterised in that** the first and/or the second winding shaft (25, 26) each have their own associated spring motor (27), which biases the respective winding shaft (25, 26) in the wind-up direction.

6. Window roller blind according to Claim 1, **characterised in that** one blind sheet (28, 37) is made of a knitted fabric or a perforated foil.

7. Window roller blind according to Claim 1, **characterised in that** one of the blind sheets (28, 37) is essentially completely non-transparent.

8. Window roller blind according to Claim 1, **characterised in that** one of the blind sheets (28, 37) is metallised on the side pointing away from the interior of the vehicle.

9. Window roller blind according to Claim 1, **characterised in that** the first and/or the second pull rod (31, 39) is/are adjustable in length such that they are able to follow the changing distance between the guide grooves (19, 21, 75).

10. Window roller blind according to Claim 3, **characterised in that** the adjacent guide grooves (19, 21) of the two pairs of guide grooves (19, 21) are arranged in a common guide rail (13).

11. Window roller blind according to Claim 1, **characterised in that** the guide grooves (19, 21, 75) are undercut guide grooves.

12. Window roller blind according to Claim 1, **characterised in that** the drive means (54) only comprises one geared motor (54) to move the two pushing members (68, 69).

13. Window roller blind according to Claim 1, **characterised in that** the pushing members (68, 69) are flexible linear pushing members, which are guided between the geared motor (55) and the respective guide groove (19, 21) to be secure against buckling.

14. Window roller blind according to Claim 1, **characterised in that** the pushing members (68, 69) are approximately cylindrical structures, which are provided with a tooth system (71) on the outside, which runs over the length with constant pitch.

15. Window roller blind according to Claim 1, **characterised in that** the tooth system (71) is formed by a rib running in a coil shape on the outside.

16. Window roller blind according to Claim 1, **characterised in that** the pushing members (68, 69) cooperate positively with the geared motor (55).

17. Window roller blind according to Claim 1, **characterised in that** at least one of the winding shafts (25, 26) is disposed at the end in a bearing clip (24), which is disposed to swivel relative to an axis in the vehicle on a base (49) fixed in the vehicle, wherein the axis lies at right angles to the rotational axis of the respective winding shaft (25, 26).

18. Window roller blind according to Claim 1, **characterised in that** the bearing bracket (24) is elastically biased through spring means (51, 52) into a centred position.

## Revendications

1. Store à enrouleur (12) destiné à régler l'entrée de la lumière à travers une fenêtre, dans l'espace interne d'un véhicule automobile, comprenant
- un premier arbre d'enroulement (25) monté en rotation,
- un second arbre d'enroulement (26) qui est monté parallèlement au premier arbre d'enroulement (25) et à proximité de celui-ci,
- une première bande de store (28) fixée par un bord sur le premier arbre d'enroulement (25), et dont le bord (29) parallèle à cet arbre est relié à une première tige de tension (31),
- une seconde bande de store (37) fixée par un bord sur le second arbre d'enroulement (26), et dont le bord (38) parallèle à cet arbre est relié à une seconde tige de tension (39),
ce store étant **caractérisé en ce qu'**il comporte :
- une paire de moyens de guidage (13, 76) dont chacune est disposée latéralement près de la bande de store (28, 37) correspondante,
- un dispositif d'entraînement (54) comportant seulement un premier et un second organe coulissant (68, 69) disposé de manière qu'une extrémité du premier organe coulissant (68) coopère avec une extrémité de la première tige de tension (31), et que l'autre extrémité du premier organe coulissant (68) coopère avec une extrémité de la seconde tige de tension (39), tandis qu'une extrémité du second organe, coulissant (69) coopère avec l'autre extrémité de la première tige de tension (32) et que l'autre extrémité du second organe coulissant (69) coopère avec l'autre extrémité de la seconde tige de tension (39), aucune des deux bandes de store (28, 37) n'étant tendue quand les organes coulissants (68, 69) sont dans une certaine position.

2. Store à enrouleur selon là revendication 1, **caractérisé en ce qu'**une extrémité de la première tige de tension (31) et une extrémité de la seconde tige de tension (39) circulent dans des rainures de guidage (19, 21, 75) qui sont espacées l'une de l'autre essentiellement de la longueur du premier ou du second arbre d'enroulement (25, 26).

3. Store à enrouleur selon la revendication 1, **caractérisé en ce que** les moyens de guidage (13, 76) sont constitués par une paire de premières rainures de guidage (19) disposées latéralement par rapport à la première bande de store (28) tendue, et servant à guider la première tige de tension (31), et par une paire de secondes rainures de guidage (21) disposées latéralement par rapport à la seconde bande de store (37) et servant à guider la seconde tige de tension (39).

4. Store à enrouleur selon la revendication 1, **caractérisé en ce que** les moyens de guidage (13, 76) sont constitués par une paire de premières rainures de guidage (19) qui sont disposées latéralement et un peu plus loin par rapport à la première bande de store (28) tendue, et servent à guider la première tige de tension (31), et par une paire de secondes rainures de guidage (21) qui sont disposées latéralement et un peu plus loin par rapport à la seconde bande de store (37) et servent à guider la seconde tige de tension (39), les premières rainures de guidage (19) et les secondes rainures de guidage (21) débouchant dans un aiguillage (76) qui se prolonge par seulement une rainure de guidage (75) s'étendant le long du bord de fenêtre concerné.

5. Store à enrouleur selon la revendication 1, **caractérisé en ce qu'**au premier et/ou au second arbre d'enroulement (25, 26) est associé chaque fois un moteur à ressort (27) propre, qui précontraint l'arbre correspondant dans le sens d'enroulement.

6. Store à enrouleur selon la revendication 1, **caractérisé en ce qu'**une bande de store (28, 37) est constituée par un tissu à mailles ou par une feuille perforée.

7. Store à enrouleur selon la revendication 1, **caractérisé en ce qu'**une des bandes de store (28, 37) est essentiellement opaque en totalité.

8. Store à enrouleur selon la revendication 1, **caractérisé en ce qu'**une des bandes de store (28, 37) est métallisée sur sa face éloignée du volume interne du véhicule.

9. Store à enrouleur selon la revendication 1, **caractérisé en ce que** la première et/ou la seconde barre de tension (31, 39) est(sont) réglable(s) en longueur, de manière à pouvoir suivre l'espacement qui varie entre les rainures de guidage (19, 21, 75).

10. Store à enrouleur selon la revendication 3, **caractérisé en ce que** les rainures de guidage (19, 21), proches l'une de l'autre, des deux paires de rainures de guidage sont disposées dans un rail de guidage commun (13).

11. Store à enrouleur selon la revendication 1, **caractérisé en ce que** les rainures de guidage (19, 21, 75) sont des rainures en contredépouille.

12. Store à enrouleur selon la revendication 1, **caractérisé en ce que** le dispositif d'entraînement (54) assurant le déplacement des deux organes coulissants (68, 69) comprend un seul motoréducteur (55).

13. Store à enrouleur selon la revendication 1, **caractérisé en ce que** les organes coulissants (68, 69) sont des organes linéaires et flexibles qui sont guidés en étant à l'abri du flambage entre le motoréducteur (55) et la rainure de guidage concernée (19, 21).

14. Store à enrouleur selon la revendication 1, **caractérisé en ce que** les organes coulissants (68, 69) sont approximativement cylindriques et portent sur leurs faces externes une denture (71) avec une division constante sur toute sa longueur.

15. Store à enrouleur selon la revendication 1, **caractérisé en ce que** là denture (71) est constituée par une nervure hélicoïdale réalisée sur la surface externe.

16. Store à enrouleur selon la revendication 1, **caractérisé en ce que** les organes de coulissement (68, 69) coopèrent avec le motoréducteur (55) avec verrouillage par combinaison de formes.

17. Store à enrouleur selon la revendication 1, **caractérisé en ce qu'**au moins un des arbres d'enroulement (25, 26) est monté par ses extrémités dans un étrier de paliers (24) qui peut basculer autour d'un axe monté dans un socle solidaire du véhicule, cet axe étant perpendiculaire à l'axe de rotation de l'arbre d'enroulement (25, 26) concerné.

18. Store à enrouleur selon la revendication 1, **caractérisé en ce que** l'étrier de paliers (24) est soumis par des moyens élastiques (51, 52) à une précontrainte en direction d'une position centrée.
